# EUROPEAN PATENT SPECIFICATION

(11) **EP 2 887 556 B1**
(45) Date of publication and mention of the grant of the patent: **09.11.2016**
(21) Application number: 13306778.5
(22) Date of filing: 19.12.2013
(51) Int. Cl.: H04B 3/54, H04L 12/24, H04L 29/06, H04L 12/28

(54) **Interference avoiding method and apparatus**
Störungsvermeidungsverfahren und -vorrichtung
Procédé et appareil de suppression d'interférence

(43) Date of publication of application: 24.06.2015
(73) Proprietor: ALCATEL LUCENT, 92100 Boulogne-Billancourt (FR)
(72) Inventor: Gacanin, Haris, 2018 Antwerpen (BE)
(74) Representative: ALU Antw Patent Attorneys

(56) References cited:
- EP-A1- 2 639 979
- US-A1- 2012 051 361
- US-A1- 2012 093 151
- US-A1- 2012 134 395
- US-A1- 2012 236 879
- US-A1- 2013 294 531

## Description

The present invention relates to an interference avoiding method and related interference avoiding device for use in a home network.

In a domain of a home network two types of devices can be named i.e. a primary device and secondary devices. The primary device is the 'owner' of the spectrum and has a full right to use it whenever it needs it. On the other hand, secondary devices are only able to access the spectrum of the domain when the primary device is not active.

The main problem is interference avoidance between a primary device and secondary devices in the event when the primary device is waking up. From the primary device perspective he does not care and he would run over secondary devices with higher power in the spectrum. However, there is an interference problem from the secondary devices for the primary device as well. On the other hand, secondary devices do have a contract with the primary device that would allow the secondary device to end his communication without severe interruption within a limited period of time.

A typical home network comprises different domains using different media such as power lines, phone lines and coaxial cables. In one domain different communication protocols might be applied. An example of such a communication protocol is e.g. G.hn which is a common name for a home network technology family of standards being developed under the International Telecommunication Union's Telecommunication Standardization sector (ITU-T) and promoted by the HomeGrid Forum and several other organizations. The G.hn defines networking over power lines, phone lines and coaxial cables. Although most elements of G.hn are common for all three media supported by the standard, G.hn includes media-specific optimization for each media such as OFDM Carrier Spacing, FEC Rates, Automatic Repeat Request ARQ, Power levels and frequency bands and MIMO support.

In this way G.hn defines a group of communication protocols each adapted to its particular medium.

Another communication protocol in a home network is HomePlug which connects in-home apparatus' over the Power Line Cable. HomePlug devices are often used as Ethernet bridges.

The following standardized communication protocols (not limited list) are defined by the HomePlug Powerline Alliance :
- HomePlug 1.0 - specification for connecting devices via power line cable in home; and
- HomePlug 2.0 - a Specification for Next-Generation Broadband Speeds over Powerline Wires; and
- HomePlug CC - Command and Control is a cheaper low-speed technology to supplement existing high-speed communications. This communication protocol offers controle over e.g. luminaires, thermostats and , safeguards; and
- HomePlug AV - especially designed for communication of Hight Definiation TV and VoIP around the home.

In one domain of a home network where the communication in the domain is provided over its particular medium different communication protocols might exist and be used next to each other by the different users in the domain.

An object of the present invention is to provide an interference avoiding method and related interference avoiding device, adapted for use in a home network using different communication protocols by different users in one domain which supports a predefined medium.

According to the invention, this object is achieved by the method and device for use in a home network using different communication protocols by different users in a domain which supports a specific medium. The method and apparatus are avoiding in the domain interference of signals of secondary devices with signals of a primary device in the event when the primary device becomes active. The secondary devices are using available spectrum opportunities of the primary device when the primary device is inactive. The method and apparatus comprises :
- determining by a first processing means a common frequency band being common to the different communication protocols being respectively used by each of the secondary devices; and
- determining by a second processing means an escape frequency band within the common frequency band; and
- upon activation of the primary device, by a global master of the home network initiating :
   - a commanding control signal towards the secondary devices for a use of the escape frequency band during a predefined period in order to execute its terminating signals which are terminating its communication session; and
   - a forbidding control signal towards the primary device in order to forbid during the predefined period a use of the escape frequency band, and thereby avoiding the above mentione interference.

By firstly determining for the secondary devices, which are all using its own communication protocol with its own frequency band, a common frequency band which is in common for the different frequency bands of the different telecommunication protocols being used by the devices in the domain; and by determining an escape frequency band only within this common frequency band, all the secondary devices are enabled to "escape" for the execution of the terminating signals which are terminating its respective communication session towards the escape frequency bandwidth for a predetermined short period. Hereby the nearly complete frequency bandwidth which is normally used by the primary device according to its communication protocol becomes free for the primary device. The primary device can already make use of this free frequency bandwidth during the predetermined period. But it is only after the predetermined time period that the primary device is allowed to use its entirely frequency bandwidth including also the escape frequency bandwidth which will not be used by the secondary devices at that time anymore since they all ended its communication session during the predetermined period.

Prior to waking up of primary device the secondary devices are using the entire spectrum. Upon waking up of the primary device the global master reassign the secondary devices to a pre-defined partial band i.e. the escape bandwidth within the spectrum for a pre-defined limited period of time. In the same time the global master will allow the primary device to access his spectrum except for the part of pre-defined band for substantially the same pre-defined period of time. After the time elapses the primary device will occupy its entire band again.

Another characteristic feature of the present invention is that the step of determining the escape frequency band being performed by the second processing means comprises :
- by the global master sensing a use of spectrum and providing the results of this sensing i.e. the measurements to a cognitive center for storage; and determining the escape frequency band based upon the measurements of the cognitive center. The cognitive center will process the received measurements and a better spectrum can be determined i.e. an escape bandwidth which might e.g. provide under numerous circumstances a best performance for all secondary devices can be determined.

A further characteristic feature is that the of determining the escape frequency band might further comprise building up at the cognitive center a library which defines the home network and its activities. Such a library would comprise at least one of a domain list of users in the home network, a communication protocol for each such user, a frequency band for each such user and protocol, a priority list among such users related to a use of available spectrum and a list of requests for spectrum related to such users. In this way the step of determining the escape frequency band can be further supported by the knowledge in the library. A cognitive center functionality is added to the interference avoiding apparatus and utilizes the cognitive spectrum sensing measurements from the global master to determine the escape bandwidth. In this way a further improvement of the spectrum use can be established and an even more suitable escape bandwidth can be determined for all secondary devices.

It has to be remarked here that although the concept of cognitive radio is know in the mobile world, the actual problem in home networks of being confronted with different communication protocols with different spectra for use by the devices is not present in the mobile world.

Further on, the global master is enabled to act as access controller which controls the domain masters of the different domains in the home network. Herewith the step of initiating step the distribution of a commanding control signal and a forbidding control signal might be implemented by means of forwarding by the global master spectrum information to the domain master of the domain which hosts the secondary devices and the primary device. Such spectrum information comprises at least information related to the escape frequency band i.e. which defines the escape frequency band. In this way the domain master is enabled to allocate the resources to the secondary devices and primary device in line with this spectrum information.

Finally, such forwarding by the global master and the allocation by the domain master can be implemented by means of a Resource Reservation Protocol. In this way, the global master is in-charge of resource allocation to the different domain masters and each domain master is responsible for its own domains.

It is to be noticed that the term 'comprising', used in the claims, should not be interpreted as being limitative to the means listed thereafter. Thus, the scope of the expression 'an apparatus comprising means A and B' should not be limited to apparatus consisting only of components A and B. It means that with respect to the present invention, the only relevant components of the apparatus are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

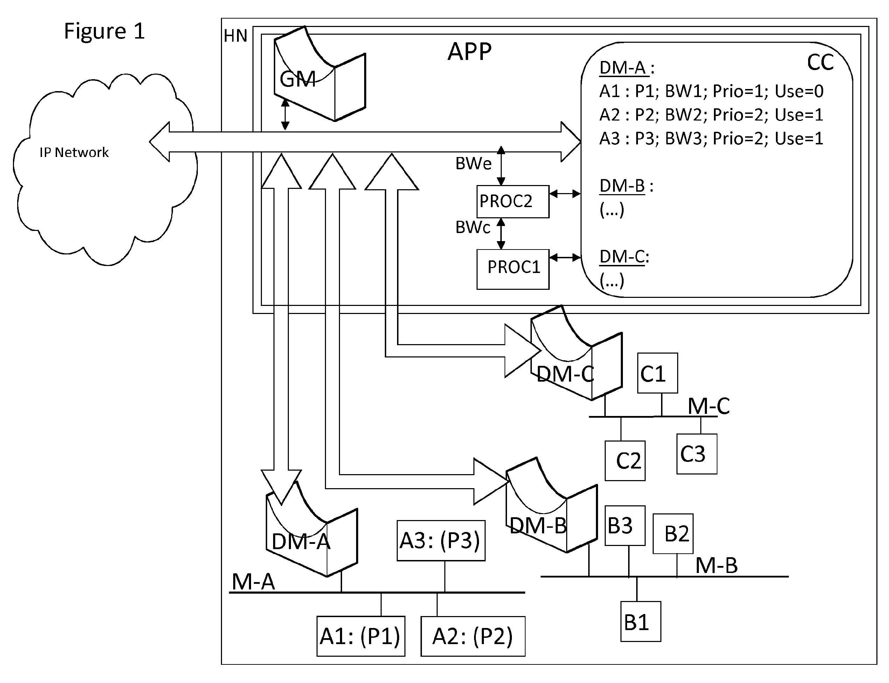

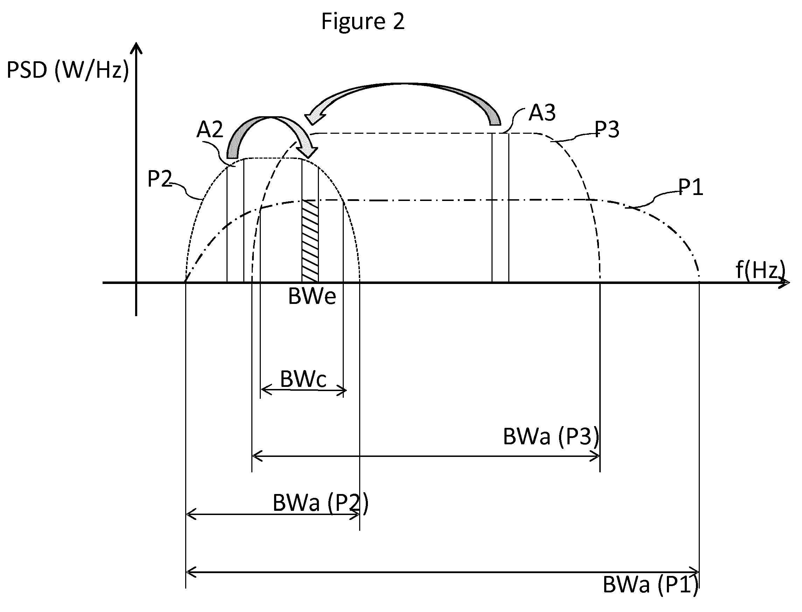

The above and other objects and features of the invention will become more apparent and the invention itself will be best understood by referring to the following description of an embodiment taken in conjunction with the accompanying drawings wherein Figure 1 represents a Home Network HN coupled to the IP network and Figure 2 shows the Power Spectral Density PSD for the different frequency bands of the different communication protocols applicable in the Domain DM-A of the Home Network HN.

The working of the interference apparatus APP according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method to avoid interference will be described in further detail.

Referring to Figure 1, a Home Network in ints telecommunication environment is shown. The Home Network HN is coupled to the IP Network via a Global Master GM. The Home Network HN comprises different Domains which are coupled to the Global Master GM, each via its Domain Master. The Domains A, B and C are shown in figure 1 and are respectively coupled to the Global Master GM via its domain Master D-A, DM-B and DM-B. Each domain uses its own Medium. In this way the Domain A uses the Medium M-A, Domain B uses the Medium M-B and the Domain C uses the Medium M-B. The applicable Domain Media are power lines, phone lines and coaxial cables but are not limited to these three ones. Presume that the Media for the Domain A is power line.

Figure 1 shows the Domain A that uses domain medium M-A which couples different devices A1, A2, and A3 of different users to the domain master DM-A; and the Domain B that uses domain medium M-B which couples different devices B1, B2 and B3 of different users to the domain master DM-B; and the Domain C that uses domain medium M-C which couples different devices C1, C2 and C3 to the Domain Master DM-C.

As explained above, different communication protocols can be used over a same Media in a same Domain. Referring to Domain A in Figure 1, the three different users A1, A2 and A3 are each one using a different protocol over its medium : device A1 uses the communication protocol P1, device A2 uses the communication protocol P2 and the device A3 uses the communication protocol P3. As a matter of example the different communication protocols are chosen as follows :
Communication Protocol P1: G.hn
Communication Protocol P2: HomePlug 1.0
Communication Protocol P3: HomePlug 2.0

It has to be explained that the applicable medium in the domain A of power line cable and the defined different protocols for the different devices in the domain A are only mentioned as a matter of example. The principle working of the present method is however not influenced by such a choice. Other kinds of medium can be chosen and other communication protocols can be applied for the different devices upon which the principle idea of the present invention can be applied as well by means of substitution of the medium and communication protocols.

As explained above, each communication protocol has its own available frequency band over the present medium. This is shown in Figure 2. Figure 2 which shows the Power Spectral Density PSD for the different frequency bands of the different communication protocols applicable in the Domain DM-A of the Home Network HN. Each protocol applicable over the present medium has its own available frequency bandwidth BWa. This is shown in the Figure 2 :
P1 : BWa (P1)
P2 : BWa (P2)
P3 : BWa (P3)

Referring to Figure 1, the different users that are using the different devices are from a certain kind of type : the device A1 is a primary user and the devices A2 and A3 are secondary users. So, in this example the device A1 communicates as a primary user/device and the devices A2 and A3 communicate as secondary users/devices. The secondary devices P2 and P3 are allowed to access the spectrum of the domain when the primary user A1 is not active. This means in that in the event when the primary user A1 is not using any of its available bandwidth BWa (P1) the secondary users P2 and P3 are permitted according to established procedures to use part of the available bandwidth BWa(P1) in line with the possibilities of the frequency reach of its own communication protocol.

Referring to Figure 2 it is shown that the device A2 is using a particular bandwidth (referred to by A2) and that the device A3 is using a particular bandwidth (referred to by A3).

In the event when the primary user is waking up i.e. becomes again active, it starts again to use its available bandwidth with high power. This would cause interference with the active secondary users A2 and A3. Moreover, these secondary users are namely allowed to finalize its communication without a severe interruption.

The interference avoiding apparatus and the interference avoiding method provide a solution to this problem.

The interference avoiding apparatus APP according to the present invention comprises the Global Master of the Home Network, a first processor PROC1, a second processor PROC2 and a Cognitive Center CC.

The Global Master is coupled to the second Processor PROC2 and the Cognitive Center CC. The first processor PROC1 is coupled to the Cognitive Center CC and the second Processor PROC2.

The first processor PROC1 is enabled to determine a common frequency band BWc being common to the different communication protocols P2 and P3 which are respectively used by each of the secondary devices. The resulting common frequency bandwidth BWc is provided by the first processor PROC1 towards the second processor PROC2.

Figures 2 shows the common frequency band BWc which is the bandwidth being in common for the communication protocol with its available bandwidth BWa(P2) for device A2 and the communication protocol with its available bandwidth BWa(P3).

The second processor PROC2 is enabled to determine an escape frequency band BWe within the common frequency band BWc and to provide the escape frequency band BWe to the global master GM.

The global master GM is enabled to initiate :
- a commanding control signal (not shown) towards the secondary devices A2 and A3 for a use of the escape frequency band BWe during a predefined period in order to execute its terminating signals which are terminating its communication session; and
- a forbidding control signal towards the primary device A1 in order to forbid during the predefined period a use of the escape frequency band BWe.

Referring to Figure 2 it is shown with two filled arrows that the devices A and B are changing its use of bandwidth towards the escape bandwidth BWe.

It has to be explained that the partial bandwidth allocation i.e. use / no use of BWe is implemented at the physical layer via orthogonal frequency division multiplexing OFDM as it is currently used in most of the wire-line standards.

An possible embodiment of the present interference avoiding apparatus is provided with the implementation of a cognitive center CC in the interference avoiding apparatus .

In a first stage the cognitive center might triggers the global master for sensing of the spectrum. The sensing might be based e.g. on input parameters such as the priority of the devices on a request list. The global master GM senses a use of the spectrum and provides the measurements of the sensing to the cognitive center CC for storage and processing. With the support of the Cognitive Center which processes the measurements stored in the cognitive center CC and further predefined rules and conditions the second processor is able to determine an escape frequency band BWe which has a good quality for each secondary device.

It has to be explained that the a cognitive center is enabled to process sensor inputs i.e. to transform, reduce, elaborate, store, recover, etc. This process requires memory which is included in the Cognitive Center CC. The processes are analyzed from different perspectives within different contexts.

Furthermore, the cognitive center might be enabled to build up a library which defines the home network HN. Such a library comprises e.g. a domain list of devices in the home network, a communication protocol for each such device, a frequency band for each such device and protocol, a priority list among such devices related to a use of available spectrum and a list of requests for spectrum related to such devices. In this way the second processor PROC2 is further enabled to determine the escape frequency band BWe based upon the processed information in the library which might provide a Bandwidth with an even more better performance for every secondary device.

It has to be explained that also the opportunistic search for free bandwidth for the secondary users in the event when a primary users becomes inactive can also be implemented by a Cognitive Center. A same Cognitive Center CC can be used for supporting both tasks i.e. searching and allocating unused bandwidth of one or more primary devices in favor of the secondary devices; and in the event when a primary users becomes again active, searching for an escape bandwidth for a number of secondary devices within the common bandwidth of these secondary devices.

So, the idea is that a cognitive functionality i.e. the cognitive center CC is added to the functionality of the global master GM which utilizes cognitive spectrum sensing; and that the second processor PROC2 is utilizing the cognitive spectrum sensing information for determination of the partial band allocation I;E. BWe during the wake-up periods of the primary devices.

Furthermore the global master GM is enabled to forward spectrum information to the domain master DM-A of the domain A order to initiate hereby the commanding control signal and forbidding control signal. Such spectrum information comprises at least information of the escape frequency band BWe. In this way the domain master DM-A is enabled to allocate the resources to the secondary devices and primary device in line with this received spectrum information i.e. the use/not use of the escape bandwidth BWe.

Such an allocation by the domain master DM-A can be implemented by means of the use of a Resource Reservation Protocol i.e. the domain master DM-A uses reservation protocol RSVP upon receipt of information about available spectrum.

Here again, such a Resource Reservation Protocol might as well be applicable for the allocation of the available resources towards the secondary devices in the event when the primary device became un-active.

As explained, in the event when the primary device becomes active again, the secondary devices which are using the spectrum of the primary device are setup to terminate their communication. The secondary devices are informed that the primary device is waking up and are directed to the escape bandwidth BWe in order to avoid interference to the primary device. This is shown in Figure 2 by means of the two filled arrows. The secondary devices A2 and A3 initiate the end of its communication session by using this determined escape bandwidth BWe.

Finally an example is here explained to show the principle working of the present invention. In this example the device A2 of domain DM-A communicates with the device B2 of domain DM-B. Both devices are secondary devices in its domain and the respective primary device of each domain is silent. In the event when one of the primary devices wakes up, the communication between A2 and A3 has to be terminated. Presume that the primary device A1 is waking up in domain DM-A. According to the basic idea of the present invention the following steps are executed :
- determining by the first processing means PROC1 the common frequency band BWc which is common to the different communication protocols being respectively used by each of the secondary devices in the domain of the primary user which is waking up i.e. within DM-A; and
- determining by the second processing means PROC2 an escape frequency band BWe within the common frequency band BWc; and
- upon activation of the primary device, by the global master GM of the home network initiating :
   - the commanding control signal towards the secondary devices for a use of the escape frequency band BWe during a predefined period in order to execute its terminating signals which are terminating its communication session; and
   - a forbidding control signal towards the primary device in order to forbid during the predefined period a use of the escape frequency band BWe, and thereby avoiding the interference in the domain DM-A.

The communication between A2 and B2 is terminated. As soon as the primary user A1 becomes again active, A2 might get an opportunity to have bandwith allocated to it again and will hereby be enabled to continue its communication with B2.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. An interference avoiding method for use in a home network (HN) using different communication protocols (P1, P2, P3) by different devices in a domain of said home network, said domain supporting a medium (M-A), said method avoiding interference in said domain of signals of secondary devices (A2, A3) with signals of a primary device (A1) in the event when said primary device becomes active, said secondary devices using available spectrum of said primary device when said primary device is inactive, **characterized in that** :
- determining by a first processing means (PROC1) a common frequency band (BWc) being common to said different communication protocols (P2, P3) being respectively used by each of said secondary devices; and
- determining by a second processing means (PROC2) an escape frequency band (BWe) within said common frequency band (BWc); and
- upon activation of said primary device, by a global master (GM) of said home network initiating :
- a commanding control signal towards said secondary devices for a use of said escape frequency band (BWe) during a predefined period in order to execute its terminating signals which are terminating its communication session; and
- a forbidding control signal towards said primary device in order to forbid during said predefined period a use of said escape frequency band (BWe), and thereby avoiding said interference.

2. The interference avoiding method according to claim 1, **characterized in that** said step of determining said escape frequency band (BWe) comprises :
- by said global master (GM) sensing a use of spectrum and providing the measurements of said sensing to a cognitive center (CC) for storage; and determining said escape frequency band (BWe) based upon said measurements of said cognitive center.

3. The interference avoiding method according to claim 2, **characterized in that** said step of determining said escape frequency band (BWe) further comprises building up at said cognitive center a library which defines said home network and its activities, said library comprises at least one of a domain list of devices in said home network, a communication protocol for each such device, a frequency band for each such device and protocol, a priority list among such devices related to a use of available spectrum and a list of requests for spectrum related to such devices; and further determining said escape frequency band (BWe) based upon said library.

4. The interference avoiding method according to claim 1,
**characterized in** by implementing said initiating step by :
- forwarding by said global master (GM) spectrum information to a domain master (DM-A) of said domain, said spectrum information comprising at least information of said escape frequency band (BWe); and to enable hereby allocation by said domain master (DM-A) resources to the secondary devices and primary device in line with said spectrum information.

5. The interference avoiding method according to claim 4 **characterized in** by implementing said forwarding by said global master and said allocation by said domain master being implemented by means of a Resource Reservation Protocol.

6. An interference avoiding apparatus (APP) for use in a home network using different communication protocols (P1, P2, P3) by different users in a domain of said home network, said domain supporting a medium (M-A), said interference avoiding device avoiding interference in said domain of signals of secondary devices (A2, A3) with signals of a primary device (A1) in the event when said primary device becomes active, said secondary devices using available spectrum of said primary device when said primary device is inactive, **characterized in that** said interference avoiding apparatus (APP) comprises :
- a first processing means (PROC1) enabled to determine a common frequency band (BWc) being common to said different communication protocols (P2, P3) being respectively used by each of said secondary devices and to provide said common frequency band (BWc) to a second processing means (PROC2) of said interference avoiding apparatus (APP); and
- said second processing means (PROC2) enabled to determine an escape frequency band (BWe) within said common frequency band (BWc) and to provide said escape frequency band (BWe) to a global master (GM) of said home network,
- said global master (GM) enabled to initiate :
- a commanding control signal towards said secondary devices for a use of said escape frequency band (BWe) during a predefined period in order to execute its terminating signals which are terminating its communication session; and
- a forbidding control signal towards said primary device in order to forbid during said predefined period a use of said escape frequency band (BWe), and thereby avoiding said interference.

7. The interference avoiding apparatus (APP) of claim 6, **characterized in that** said apparatus further comprises a cognitive center (CC) for receiving from said global master (GM) measurements of a sensing of a use of spectrum being performed by said global master, said second processing means (PROC2) being further enabled to determine said escape frequency band (BWe) based upon said measurements received from said cognitive center.

8. The interference avoiding apparatus (APP) according to claim 7, **characterized in that** said cognitive center (CC) being enabled to build up a library which defines said home network, said library comprises at least one of a domain list of users in said home network, a communication protocol for each such devices, a frequency band for each such device and protocol, a priority list among such devices related to a use of available spectrum and a list of requests for spectrum related to such devices; and said second processing means (PROC2) being further enabled to determine said escape frequency band (BWe) based upon said library.

9. The interference avoiding apparatus (APP) according to claim 6, **characterized by** that said global master (GM) being further enabled to
- forward spectrum information to a domain master (DM-A) of said domain in order to initiate hereby said commanding control signal and forbidding control signal, said spectrum information comprising at least information of said escape frequency band (BWe);
and to enable hereby allocation by said domain master (DM-A) resources to the secondary devices and primary device in line with said spectrum information.

10. The interference avoiding apparatus (APP) according to claim 9, **characterized in** by implementing said forwarding by said global master and said allocation by said domain master by means of a Resource Reservation Protocol.

## Patentansprüche

1. Störungsvermeidungsverfahren zur Anwendung in einem Heimnetzwerk (HN), das verschiedene Kommunikationsprotokolle (P1, P2, P3) für verschiedene Geräte in einer Domain besagten Heimnetzwerks verwendet, wobei besagte Domain ein Medium (M-A) unterstützt, wobei besagtes Verfahren Störungen in besagter Domain zwischen Signalen sekundärer Geräte (A2, A3) und Signalen eines primären Geräts (A1) in dem Fall vermeidet, dass besagtes primäres Gerät aktiv wird, wobei besagte sekundäre Geräte verfügbares Spektrum besagten primären Geräts verwenden, wenn besagtes primäres Gerät inaktiv ist, **gekennzeichnet durch**:
- das Bestimmen eines gemeinsamen Frequenzbands (BWc) **durch** ein erstes Verarbeitungsmittel (PROC1), wobei besagtes Frequenzband (BWc) besagten unterschiedlichen Protokollen (P2, P3) gemeinsam ist, die jeweils von einem jeden besagter sekundärer Geräte benutzt werden; und
- das Bestimmen **durch** ein zweites Verarbeitungsmittel (PROC2) eines Ausweichfrequenzbands (BWe) innerhalb besagten gemeinsamen Frequenzbands (BWc); und
- auf die Aktivierung besagten ersten Geräts hin das **durch** eine Global Master (GM) besagten Heimnetzwerks erfolgende Initiieren:
- eines Befehlssteuerungssignals zu besagten sekundären Geräten zur Benutzung besagten Ausweichfrequenzbands (BWe) während eines vordefinierten Zeitraums zur Ausführung ihrer Beendigungssignale zur Beendigung ihrer Kommunikationssitzung; und
- ein Verbotssteuerungssignal zu besagtem primärem Gerät, um während besagten, vordefinierten Zeitraums eine Benutzung besagten Ausweichfrequenzbands (BWe) zu verbieten, **dadurch** besagte Störung vermeidend.

2. Das Störungsvermeidungsverfahren nach Anspruch 1, **dadurch gekennzeichnet, dass** besagter Schritt des Bestimmens besagten Ausweichfrequenzbands (BWe) umfasst:
- das Erfassen durch den Global Master (GM) einer Spektrumsnutzung und das Bereitstellen des Messwerts besagter Erfassung an ein Kognitionszentrum (Cognitive Center, CC) zur Speicherung; und das Bestimmen besagten Ausweichfrequenzbands (BWe) auf der Grundlage besagten Messwerts besagten Kognitionszentrums.

3. Das Störungsvermeidungsverfahren nach Anspruch 2, **dadurch gekennzeichnet, dass** besagter Schritt des Bestimmens besagten Ausweichfrequenzbands (BWe) weiterhin den Aufbau einer Bibliothek in besagtem Kognitionszentrum umfasst, welche besagtes Heimnetzwerk und seine Aktivitäten definiert, wobei besagte Bibliothek mindestens entweder eine Domainliste von Geräten in besagtem Heimnetzwerk, ein Kommunikationsprotokoll für jedes der betreffenden Geräte oder ein Frequenzband für ein jedes der betreffenden Geräte und Protokolle, eine Prioritätenliste für die betreffenden Geräte hinsichtlich einer Benutzung verfügbaren Spektrums oder eine Liste von Spektrumsanfragen bezüglich der betreffenden Geräte umfasst; und weiterhin das Bestimmen besagten Ausweichfrequenzbands (BWe) auf der Grundlage besagter Bibliothek.

4. Das Störungsvermeidungsverfahren nach Anspruch 1, **gekennzeichnet durch** das Implementieren besagten Implementierungsschritts **durch**:
- das Weiterleiten von Spektrumsinformationen **durch** besagten Global Master (GM) an einen Domain Master (DM-A) besagter Domain, wobei besagte Spektrumsinformationen mindestens Informationen zu besagtem Ausweichfrequenzband (BWe) umfassen; und das Aktivieren der Zuweisung von Ressourcen des Domain Masters (DM-A) an die sekundären Geräte und die primären Geräte, die mit besagten Spektrumsinformationen übereinstimmen.

5. Das Störungsvermeidungsverfahren nach Anspruch 4, **gekennzeichnet durch** das Implementieren besagten Weiterleitens **durch** besagten Global Master und besagter Zuweisung **durch** besagten Domain Master anhand eines Ressourcenreservierungsprotokolls.

6. Störungsvermeidungsvorrichtung (APP) zur Anwendung in einem Heimnetzwerk, die verschiedene Kommunikationsprotokolle (P1, P2, P3) für verschiedene Benutzer in einer Domain besagten Heimnetzwerks verwendet, wobei besagte Domain ein Medium (M-A) unterstützt, wobei besagte Störungsvermeidungsvorrichtung Störungen in besagter Domain zwischen Signalen sekundärer Geräte (A2, A3) und Signalen eines primären Geräts (A1) in dem Fall vermeidet, dass besagtes primäres Gerät aktiv wird, wobei besagte sekundäre Geräte verfügbares Spektrum besagten primären Geräts verwenden, wenn besagtes primäres Gerät inaktiv ist, **dadurch gekennzeichnet, dass** besagte Störungsvermeidungsvorrichtung (APP) umfasst:
- ein erstes Verarbeitungsmittel (PROC1), ausgelegt für das Bestimmen eines gemeinsamen Frequenzbands (BWc), das besagten verschiedenen Kommunikationsprotokollen (P2, P3) gemeinsam ist, die jeweils von einem jeden der besagten sekundären Geräte verwendet werden, und für das Bereitstellen besagten gemeinsamen Frequenzbands (BWc) für ein zweites Verarbeitungsmittel (PROC2) besagter Störungsvermeidungsvorrichtung (APP); und
- wobei besagte zweite Verarbeitungsmittel (PROC2) dafür ausgelegt sind, um ein Ausweichfrequenzband (BWe) innerhalb besagten gemeinsamen Frequenzbands (BWc) zu bestimmen und besagtes Ausweichfrequenzband (BWe) besagtem Global Master (GM) besagten Heimnetzwerks zur Verfügung zu stellen,
wobei besagter Global Master (GM) dafür ausgelegt ist, um Folgendes zu initiieren:
- ein Befehlssteuerungssignal zu besagten sekundären Geräten zur Benutzung besagten Ausweichfrequenzbands (BWe) während eines vordefinierten Zeitraums zur Ausführung ihrer Beendigungssignale zur Beendigung ihrer Kommunikationssitzung; und
- ein Verbotssteuerungssignal zu besagtem primärem Gerät, um während besagten vordefinierten Zeitraums eine Benutzung besagten Ausweichfrequenzbands (BWe) zu verbieten, dadurch besagte Störung vermeidend.

7. Die Störungsvermeidungsvorrichtung (APP) nach Anspruch 6, **dadurch gekennzeichnet, dass** besagte Vorrichtung weiterhin ein Kognitionszentrum (CC) umfasst, um von besagtem Global Master (GM) Messungen einer von besagtem Global Master durchgeführten Erfassung einer Benutzung eines Spektrums zu empfangen, wobei besagte Verarbeitungsmittel (PROC2) weiterhin dafür ausgelegt sind, um besagtes Ausweichfrequenzband (BWe) auf der Grundlage besagter vom Kognitionszentrum empfangener Messungen zu bestimmen.

8. Die Störungsvermeidungsvorrichtung (APP) nach Anspruch 7, **dadurch gekennzeichnet, dass** besagtes Kognitionszentrum (CC) ausgelegt ist für den Aufbau einer Bibliothek, welche besagtes Heimnetzwerk definiert, wobei besagte Bibliothek mindestens entweder eine Domainliste von Benutzern in besagtem Heimnetzwerk, ein Kommunikationsprotokoll für jedes der betreffenden Geräte, ein Frequenzband für ein jedes der betreffenden Geräte und Protokolle, eine Prioritätenliste für die betreffenden Geräte hinsichtlich einer Benutzung verfügbaren Spektrums oder eine Liste von Spektrumsanfragen bezüglich der betreffenden Geräte umfasst; und wobei besagte zweite Verarbeitungsmittel (PROC2) weiterhin ausgelegt sind für das Bestimmen besagten Ausweichfrequenzbands (BWe) auf der Grundlage besagter Bibliothek.

9. Die Störungsvermeidungsvorrichtung (APP) nach Anspruch 6, **dadurch gekennzeichnet, dass** besagter Global Master (GM) weiterhin ausgelegt ist
- für das Weiterleiten von Spektrumsinformationen an einen Domain Master (DM-A) besagter Domain, um dadurch besagtes Befehlssteuerungssignal und besagtes Verbotssteuerungssignal zu initiieren, wobei besagte Spektrumsinformationen mindestens eine Information zu besagtem Ausweichfrequenzband (BWe) umfassen;
und dafür, die Zuweisung von Ressourcen an die sekundären Geräte und das primäre Gerät gemäß besagten Spektrumsinformationen durch besagten Domain Master (DM-A) zu aktivieren.

10. Die Störungsvermeidungsvorrichtung (APP) nach Anspruch 9, **gekennzeichnet durch** das Implementieren besagten Weiterleitens **durch** besagten Global Master und besagter Zuweisung **durch** besagten Domain Master anhand eines Ressourcenreservierungsprotokolls.

## Revendications

1. Procédé permettant d'éviter des interférences destiné à être utilisé dans un réseau domestique (HN) en utilisant différents protocoles de communication (P1, P2, P3) par différents dispositifs dans un domaine dudit réseau domestique, ledit domaine prenant en charge un support (M-A), ledit procédé permettant d'éviter des interférences dans ledit domaine de signaux de dispositifs secondaires (A2, A3) avec des signaux d'un dispositif primaire (A1) au cas où ledit dispositif primaire deviendrait actif, lesdits dispositifs secondaires utilisant un spectre disponible dudit dispositif primaire lorsque ledit dispositif primaire est inactif, **caractérisé par** les étapes suivantes :
- déterminer au moyen de premiers moyens de traitement (PROC1) une bande de fréquence commune (BWc) commune auxdits différents protocoles de communication (P2, P3) utilisés respectivement par chacun desdits dispositifs secondaires ; et
- déterminer au moyen de deuxièmes moyens de traitement (PROC2) une bande de fréquence d'échappement (BWe) dans ladite bande de fréquence commune (BWc) ; et
- lors de l'activation dudit dispositif primaire, par un maître global (GM) dudit réseau domestique initier :
- un signal de commande de supervision en direction desdits dispositifs secondaires pour une utilisation de ladite bande de fréquence d'échappement (BWe) durant une période prédéfinie afin d'exécuter ses signaux de terminaison qui mettent fin à sa session de communication ; et
- un signal de commande d'interdiction en direction dudit dispositif primaire afin d'interdire durant ladite période prédéfinie une utilisation de ladite bande de fréquence d'échappement (BWe), évitant ainsi ladite interférence.

2. Procédé permettant d'éviter des interférences selon la revendication 1, **caractérisé en ce que** ladite étape de détermination de ladite bande de fréquence d'échappement (BWe) comprend les étapes suivantes :
- au moyen dudit maître global (GM), détecter une utilisation d'un spectre et fournir les mesures de ladite détection à un centre cognitif (CC) pour le stockage ; et déterminer ladite bande de fréquence d'échappement (BWe) sur la base desdites mesures dudit centre cognitif.

3. Procédé permettant d'éviter des interférences selon la revendication 2, **caractérisé en ce que** ladite étape de détermination de ladite bande de fréquence d'échappement (BWe) comprend en outre l'accumulation, au niveau dudit centre cognitif, d'une bibliothèque qui définit ledit réseau domestique et ses activités, ladite bibliothèque comprend au moins un élément parmi une liste de domaines de dispositifs dans ledit réseau domestique, un protocole de communication pour chacun de ces dispositifs, une bande de fréquence pour chacun de ces dispositifs et protocoles, une liste de priorités parmi ces dispositifs relative à une utilisation d'un spectre disponible et une liste de demandes d'un spectre relative à ces dispositifs ; et déterminant en outre ladite bande de fréquence d'échappement (BWe) sur la base de ladite bibliothèque.

4. Procédé permettant d'éviter des interférences selon la revendication 1, **caractérisé en ce qu'**il met en oeuvre ladite étape d'initiation :
- en transférant, au moyen dudit maître global (GM), des informations de spectre vers un maître de domaine (DM-A) dudit domaine, lesdites informations de spectre comprenant au moins des informations de ladite bande de fréquence d'échappement (BWe) ; permettant ainsi l'attribution par ledit maître de domaine (DM-A) de ressources aux dispositifs secondaires et au dispositif primaire en association avec lesdites informations de spectre.

5. Procédé permettant d'éviter des interférences selon la revendication 4 **caractérisé par** la mise en oeuvre dudit transfert par ledit maître global et de ladite attribution par ledit maître de domaine au moyen d'un protocole de réservation de ressources.

6. Appareil permettant d'éviter des interférences (APP) destiné à être utilisé dans un réseau domestique en utilisant différents protocoles de communication (P1, P2, P3) par différents utilisateurs dans un domaine dudit réseau domestique, ledit domaine prenant en charge un support (M-A), ledit dispositif permettant d'éviter des interférences évitant des interférences dans ledit domaine de signaux de dispositifs secondaires (A2, A3) avec des signaux d'un dispositif primaire (A1) au cas où ledit dispositif primaire deviendrait actif, lesdits dispositifs secondaires utilisant un spectre disponible dudit dispositif primaire lorsque ledit dispositif primaire est inactif, **caractérisé en ce que** ledit appareil permettant d'éviter des interférences (APP) comprend :
- des premiers moyens de traitement (PROC1) permettant de déterminer une bande de fréquence commune (BWc) commune auxdits différents protocoles de communication (P2, P3) utilisés respectivement par chacun desdits dispositifs secondaires et permettant de fournir ladite bande de fréquence commune (BWc) aux deuxièmes moyens de traitement (PROC2) dudit appareil permettant d'éviter des interférences (APP) ; et
- lesdits deuxièmes moyens de traitement (PROC2) permettant de déterminer une bande de fréquence d'échappement (BWe) dans ladite bande de fréquence commune (BWc) et permettant de fournir ladite bande de fréquence d'échappement (BWe) à un maître global (GM) dudit réseau domestique,
- ledit maître global (GM) permettant d'initier :
- un signal de commande de supervision en direction desdits dispositifs secondaires pour une utilisation de ladite bande de fréquence d'échappement (BWe) durant une période prédéfinie afin d'exécuter ses signaux de terminaison qui mettent fin à sa session de communication ; et
- un signal de commande d'interdiction en direction dudit dispositif primaire afin d'interdire durant ladite période prédéfinie une utilisation de ladite bande de fréquence d'échappement (BWe), évitant ainsi ladite interférence.

7. Appareil permettant d'éviter des interférences (APP) selon la revendication 6, **caractérisé en ce que** ledit appareil comprend en outre un centre cognitif (CC) pour recevoir à partir dudit maître global (GM) des mesures d'une détection d'une utilisation d'un spectre effectuées par ledit maître global, lesdits deuxièmes moyens de traitement (PROC2) permettant en outre de déterminer ladite bande de fréquence d'échappement (BWe) sur la base desdites mesures provenant dudit centre cognitif.

8. Appareil permettant d'éviter des interférences (APP) selon la revendication 7, **caractérisé en ce que** ledit centre cognitif (CC) permet l'accumulation d'une bibliothèque qui définit ledit réseau domestique, ladite bibliothèque comprend au moins un élément parmi une liste de domaines d'utilisateurs dans ledit réseau domestique, un protocole de communication pour chacun de ces dispositifs, une bande de fréquence pour chacun de ces dispositifs et protocoles, une liste de priorités parmi ces dispositifs relative à une utilisation d'un spectre disponible et une liste de demandes d'un spectre relative à ces dispositifs ; et lesdits deuxièmes moyens de traitement (PROC2) permettant en outre de déterminer ladite bande de fréquence d'échappement (BWe) sur la base de ladite bibliothèque.

9. Appareil permettant d'éviter des interférences (APP) selon la revendication 6, **caractérisé en ce que** ledit maître global (GM) permet en outre :
- de transférer des informations de spectre vers un maître de domaine (DM-A) dudit domaine afin d'initier ledit signal de commande de supervision et ledit signal de commande d'interdiction, lesdites informations de spectre comprenant au moins des informations de ladite bande de fréquence d'échappement (BWe) ;
et afin de permettre l'attribution par ledit maître de domaine (DM-A) de ressources aux dispositifs secondaires et au dispositif primaire en association avec lesdites informations de spectre.

10. Appareil permettant d'éviter des interférences (APP) selon la revendication 9 **caractérisé par** la mise en oeuvre dudit transfert par ledit maître global et de ladite attribution par ledit maître de domaine au moyen d'un protocole de réservation de ressources.
